# EUROPEAN PATENT SPECIFICATION

(11) **EP 1 291 442 B1**
(45) Date of publication and mention of the grant of the patent: **31.05.2006**
(21) Application number: 01938662.2
(22) Date of filing: 14.06.2001
(51) Int. Cl.: C21C 1/02, C21C 7/076

(54) **METHOD AND APPARATUS FOR PRODUCING DESULFURIZING AGENT FOR HOT-METAL**
VERFAHREN UND VORRICHTUNG ZUR HERSTELLUNG VON ENTSCHWEFELUNGSMITTELN FÜR HEISSE METALLE
PROCEDE ET DISPOSITIF PERMETTANT DE PRODUIRE UN AGENT DE DESULFURATION POUR METAL CHAUD

(30) Priority: 14.06.2000 JP 2000178321
(43) Date of publication of application: 12.03.2003
(73) Proprietor: JFE Steel Corporation, Chiyoda-ku Tokyo 100-0011 (JP)
(72) Inventor: NAKAI, Yoshie, Chiyoda-ku, Tokyo 100-0005 (JP); SHIMIZU, Hiroshi, Chiyoda-ku, Tokyo 100-0005 (JP); TAKAOKA, Toshio, Chiyoda-ku, Tokyo 100-0005 (JP); KIKUCHI, Yoshiteru, Chiyoda-ku, Tokyo 100-0005 (JP); TANAKA, Shuei, Chiyoda-ku, Tokyo 100-0005 (JP); WAKAMATSU, Shinichi, Chiyoda-ku, Tokyo 100-0005 (JP); WATANABE, Atsushi, Chiyoda-ku, Tokyo 100-0005 (JP); YAMASE, Osamu, Minato-ku, Tokyo 108-6031 (JP)
(74) Representative: Grynwald, Albert
(86) International application number: PCT/JP2001/005065
(87) International publication number: WO 2001/096616

(56) References cited:
- WO-A-99/60173
- DE-A- 19 910 398
- JP-A- 3 024 215
- JP-A- 4 120 209
- JP-A- 10 030 115
- JP-A- 52 044 714
- JP-A- 63 219 514
- US-A- 5 397 379

## Description

### Technical Field

The present invention relates to a method of manufacturing a desulfurizing agent for hot metal and a desulfurizing agent, and in particular, to a method of manufacturing a desulfurizing agent for hot metal, which method effectively reuses desulfurization slag (KR slag) resulting from a mechanical agitation type hot metal desulfurizing treatment step, an apparatus for use in this method, a desulfurizing agent (flux) tor use in this method and apparatus, and a method of desulfurizing hot metal using this desulfurizing agent.

### Background Art

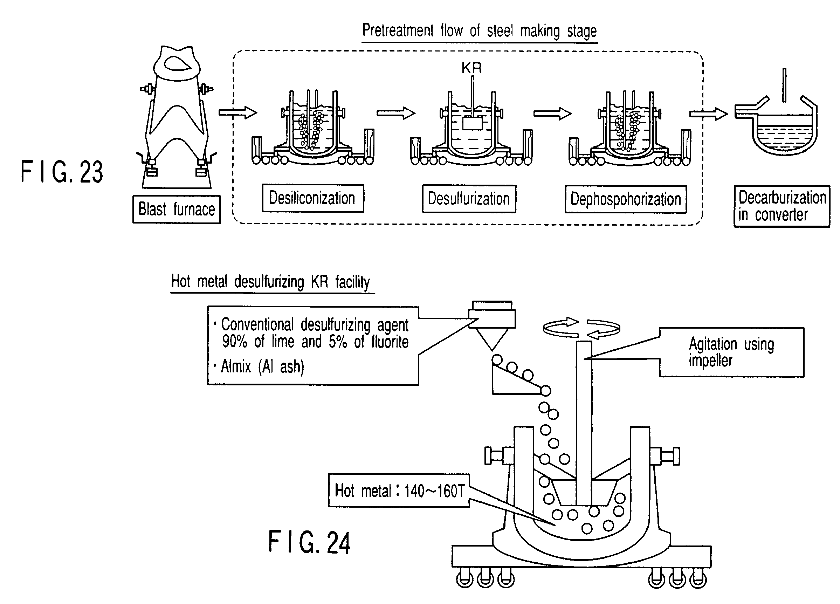

Hot metal output from a blast furnace contains a high concentration of sulfur (S), which normally affects the quality of steel. However, since a converter step is intended to oxidize and remove impurities, molten steel is not expected to be desulfurized except for part thereof which is vaporized and desulfurized. Thus, depending on the desired quality, various hot metal pretreatments are executed between the blast furnace step and the converter step or molten steel is desulfurized after the converter step. FIG. 23 shows an example of a hot metal pretreatment. In the illustrated example, hot metal from the blast furnace is sequentially subjected to a desiliconizing treatment, a desulfurizing treatment, and a dephosphorizing treatment. The hot metal is then placed in the converter, where it is subjected to a decarburizing treatment.

For desulfurization, a lime-based desulfurizing agent is often used. A desulfurizing reaction in this case proceeds according to the reaction formula shown below.

CaO + S → CaS + O

With only CaO, such a desulfurizing reaction involves a high melting point. Thus, typically, fluorite, alumina-based flux, or the like is industrially used to facilitate slagging. However, these slagging agents are generally expensive, so that an increase in the compounding rate of such a slagging agent leads to an increase in the costs of the desulfurizing agent. Furthermore, an increase in the compounding rate of the slagging agent may reduce the concentration of lime in the desulfurizing agent to degrade reaction effects.

Further, slag resulting from a pyrometalurgy step in a blast furnace or a converter is reused for blast furnace cement, concrete material, fertilizers, or road material after having contained metal removed. However, desulfurization slag is characterized by containing a large amount of CaO and being likely to be weathered. Accordingly, there is no other way but to use the desulfurizing slag for cement material by executing a pretreatment that requires much time and labor. Furthermore, at present, this treatment involves high cost.

Jpn. Pat. Appln. KOKAI Publication No. 4-120209 describes a technique of utilizing converter slag as a slagging agent. This application states that the grain size of the blast furnace slag is set at 3 to 50 mm and that this range of grain size serves, to produce a sufficient dephosphorizing effect. However, this application is not mainly intended for desulfurization, and has no references to desulfurization.

Further, Jpn. Pat. Appln. KOKAI Publication No. 10-30115 discloses a technique of cooling and crushing converter slag, separating and recovering the iron component from the slag, and compounding lime and fluorite into the slag so that it can be used as a desulfurizing agent. However, this application has no references to the recycling of desulfurization slag as in the above technique.

As an example of the recycling of desulfurization slag, there is a report on a process of reusing injection desulfurization slag containing a large amount of unreacted lime, in a mechanical agitation type hot metal desulfurizing treatment which allows lime to be used efficiently (Sumitomo Metals Vol. 45-3 (1993) p. 52 to 58). However, with the treatment (hereinafter referred to as the "prior art of desulfurization slag recycling") reported in this document, there is a limit to the improvement of efficiency of utilization of lime as described later. Further, since this technique reuses the slag in the process using different addition and agitation methods, it is not applicable if a plurality of processes are not available.

A mechanical agitation type hot metal desulfurization apparatus desulfurizes hot metal by immersing and rotating an impeller in hot metal, adding a desulfurizing agent (normally lime) to the hot metal from above, and rotating the impeller to agitate the hot metal. A process commonly known as the "KR method" is a hot metal desulfurizing treatment using this apparatus. FIG. 24 shows an example of a desulfurizing facility.

As described above, at present, desulfurization slag resulting from a hot metal desulfurizing treatment is not effectively recycled. Further, for desulfurization of hot metal, there are many points to be improved.

### Disclosure of Invention

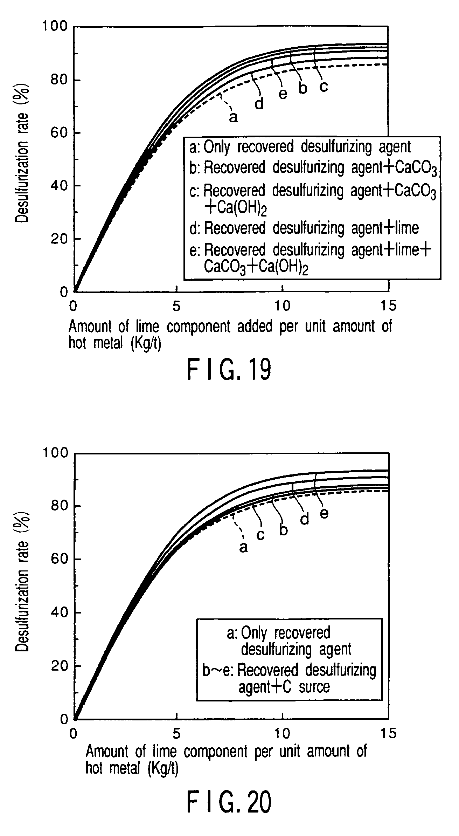

The inventors examined the efficiency of utilization of a desulfurizing agent used in the KR desulfurizing step. FIG. 18 shows the ratio of lime effectively used to introduced lime wherein the case in which desulfurization slag resulting from a mechanical agitation type hot metal desulfurizing treatment method is used as a desulfurizing agent for the mechanical agitation type hot metal desulfurizing treatment method is compared with the case in which desulfurization slag resulting from an injection method is used as a desulfurizing agent for the mechanical agitation type hot metal desulfurizing treatment method. As indicated in FIG. 18, the inventors have found that the efficiency of utilization of the desulfurizing agent during a single KR desulfurizing step corresponds to about 7% of the total desulfurizing agent, with the remaining 93% unreacted. Accordingly, on the basis of this knowledge, the inventors expected that the desulfurizing agent that has been used in the KR desulfurizing step can be reused as an inexpensive source of lime for the desulfurizing agent because it still contains about 93% of lime that contributes to desulfurization in the subsequent treatment.

The present invention is provided on the basis of this knowledge. desulfurization and the amount of slag generated.

It is another object of the present invention to inexpensively carry out a hot metal desulfurizing treatment with a reduced amount of slag generated and to provide a desulfurizing agent for use in this treatment.

It is yet another object of the present invention to provide a method of transporting desulfurization slag and an apparatus used to manufacture desulfurization slag.

The present invention provide a method of manufacturing a hot metal desulfurizing as defined in claim 1. Preferred embodiments are defined in claims 2-9.

"Desulfurizing agent" refers to common fluxes used for desulfurization. It includes slag recovered after a treatment for creating a new surface.

"Recovered desulfurizing agent" refers specifically to a desulfurizing agent comprising slag recovered after the treatment for creating a new surface, wherein the slag may contain metal.

"Desulfurization slag" refers to desulfurization slag containing all of a CaO component, other slag components, and a metal component and which has not been subjected to the treatment for creating a new surface.

"Lime" refers to common CaO components.

### Brief Description of Drawings

FIG. 1 is a graph illustrating the relationship between the amount of lime added per unit amount of hot metal and desulfurization rate, for recovered desulfurizing agents resulting from the first and second recycling operations, respectively, as well as a conventional lime desulfurizing agent for comparison.
FIG. 2 is a graph illustrating the relationship between the number of times of recycling processes executed on desulfurization slag and the amount of desulfurizing agent used per unit amount of hot metal wherein the slag is recycled a number of times.
FIG. 3 is a graph illustrating the relationship between the amount of desulfurizing agent added per unit amount of hot metal and the desulfurization rate, for the recovered desulfurizing agent and the conventional desulfurizing agent for comparison.
FIG. 4 is a graph illustrating the relationship between the amount of lime component added per unit amount of hot metal and the desulfurization rate, for the recovered desulfurizing agent and the conventional desulfurizing agent for comparison.
FIG. 5 is a graph illustrating the relationship between the amount of lime added per unit amount of hot metal and the desulfurization rate, for the recovered desulfurizing agent treated according to the present method and the conventional desulfurizing agent for comparison.
FIG. 6 is a graph illustrating the relationship between the temperature of slag measured at the end of watering and the time required to cool the slag down to room temperature, wherein a treatment is executed using a desulfurization slag treatment method according to the present invention.
FIG. 7 is a graph illustrating the relationship between the temperature of the slag measured at the end of watering and the amount of Ca(OH)₂ generated in the recovered desulfurizing agent, wherein a treatment is executed using the desulfurization slag treatment method according to the present invention.
FIG. 8 is a graph illustrating the relationship between the time required to cool slag with different thicknesses and the temperature of the slag, wherein a treatment is executed using the desulfurization slag treatment method according to the present invention.
FIG. 9 is a graph showing the relationship between the amount of lime added per unit amount of hot metal and desulfurization rate, for the recovered desulfurizing agent treated according to the present invention and the conventional desulfurizing agent for comparison.
FIG. 10 is a graph showing the relationship between the amount of lime added per unit amount of hot metal and desulfurization rate, for the recovered desulfurizing agent recycled according to the present invention and the conventional desulfurizing agent for comparison.
FIG. 11 is a view showing an example of a screening jig.
FIG. 12 is a view showing a screening facility
FIG. 13A is a view useful in describing an essential part of a recovered desulfurizing agent loading apparatus, and FIG. 13B is a schematic view showing the entire recovered desulfurizing agent loading apparatus.
FIG. 14 is a graph showing the amount of pure CaO component in the desulfurizing agent and the amount of material desulfurized (the amount of sulfur before treatment (S) - the amount of sulfur after treatment (S)).
FIG. 15 is a graph showing the bulk density and CaO mass % of desulfurization slag.
FIG. 16 is a graph showing the relationship between the amount of lime added per unit amount of hot metal and the desulfurization rate, for desulfurizing agents obtained by mixing the recovered desulfurizing agent recovered according to the present invention with lime and a conventional desulfurizing agent as a comparative example.
FIG. 17A is a view showing a slag treatment pattern performed by a plant test.
FIG. 17B is a view showing an example of the slag treatment pattern in FIG. 17A together with a conventional slag treatment pattern.
FIG. 18 is a graph showing the ratio of lime effectively used for desulfurization to introduced lime, by comparing the case in which desulfurizing agent resulting from a mechanical agitation type hot metal desulfurizing treatment method is used as a desulfurizing agent for the mechanical agitation type hot metal desulfurizing treatment with the case in which desulfurization slag resulting from an injection method is used as a desulfurizing agent for the mechanical agitation type hot metal desulfurizing treatment method.
FIG. 19 is a graph showing the relationship between the amount of lime component added per unit amount of hot metal and the desulfurization rate at each desulfurization level.
FIG. 20 is a graph showing the relationship between the amount of lime component added per unit amount of hot metal and the desulfurization rate at each desulfurization level.

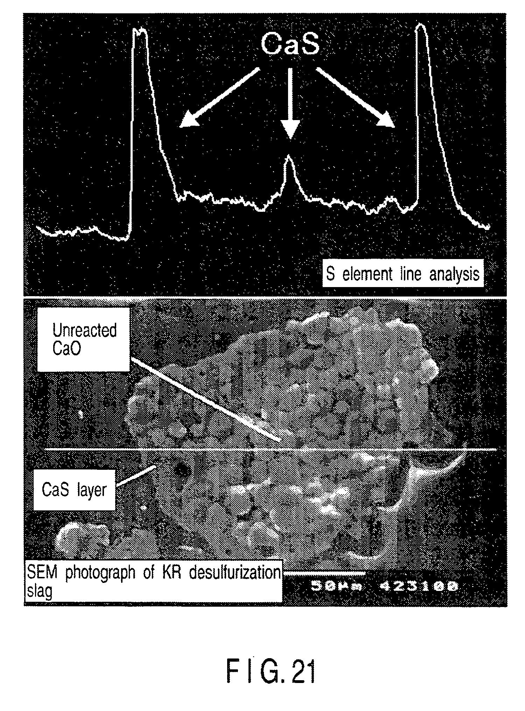

FIG. 21 is a photograph showing how an aggregate of desulfurization slag resulting from the mechanical agitation type hot metal desulfurizing treatment was observed using an SEM, and a view showing the results of line analysis of an S element in the aggregate.

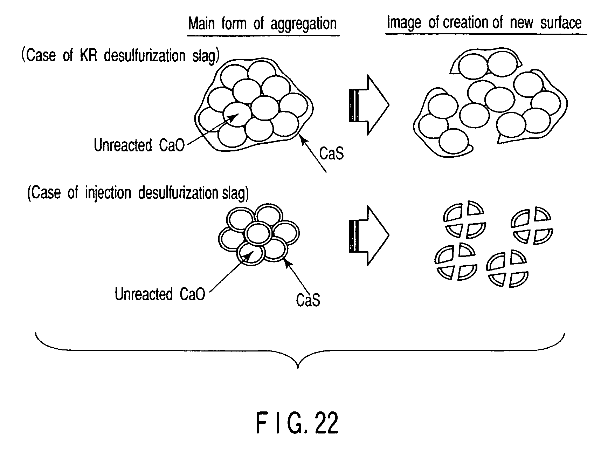

FIG. 22 is a view schematically showing differences between agitating type hot metal desulfurization slag and hot metal desulfurization slag obtained by the injection method.
FIG. 23 is a view showing an example of a hot metal pretreatment.
FIG. 24 is a view showing an example of a desulfurizing facility, shown in FIG. 23.

### Best Mode for Carrying Out of the Invention

### (Specific Treatment for Desulfurization Slag)

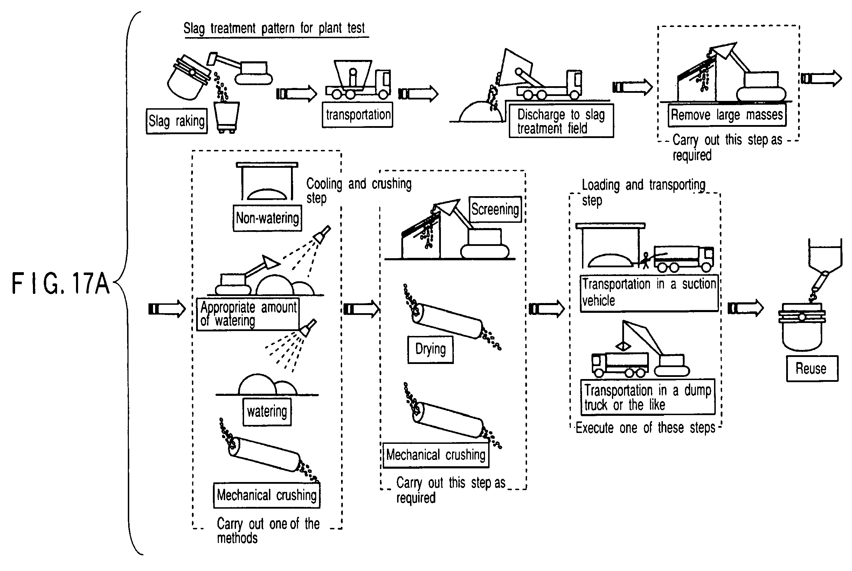

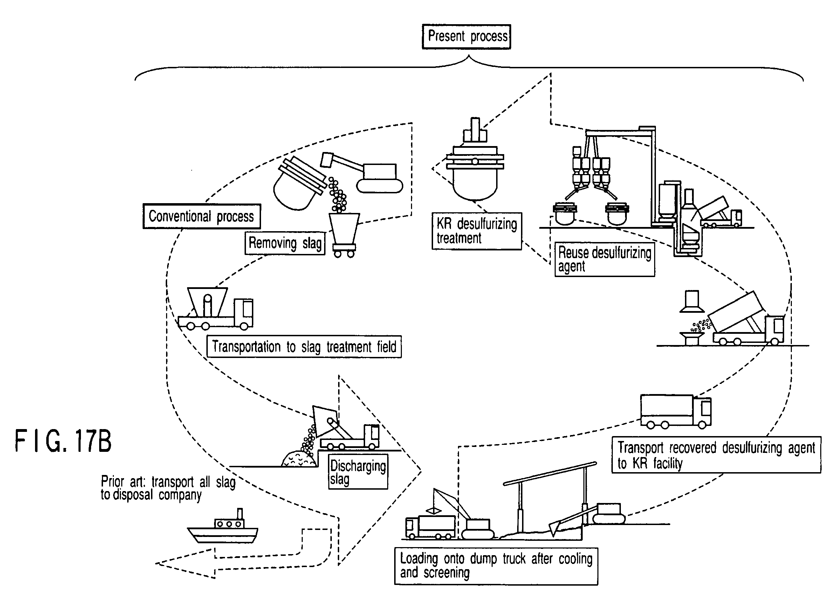

FIG. 17A shows a slag treatment pattern performed by a plant test, and FIG. 17B shows an example of the slag treatment pattern in FIG. 17A together with a conventional slag treatment pattern.

According to the present invention, a method is used to create new surfaces in desulfurization slag resulting from a desulfurizing step, and the slag obtained is reused as a desulfurizing agent. In this case, an unreacted lime component must be exposed as a desulfurization reacting surface so that the slag can be used as a desulfurizing agent for the next process. The method used to achieve this is a watering and cooling process to create new surfaces, CaCO₃ and Ca(OH)₂ are generated. The residual CaCO₃ and Ca(OH)₂ do not hinder desulfurization reaction, but an appropriate amount of these components are expected to serve to improve this reaction. Further, a metal component of a larger diameter can be removed by magnetic separation or screening, so that a recovered desulfurizing agent is mainly composed of a lime component. Furthermore, the grain size of this recovered desulfurizing agent is restricted by a supply apparatus in a desulfurizing facility where the agent is used. Accordingly, no problems occur provided that an appropriate grain size is used. On the other hand, residual metal of a smaller diameter may remain in the recovered desulfurizing agent. However, this metal can be reused as an iron source for the subsequent hot metal pretreatment step, thereby significantly contributing to increasing the yield of iron. Various specific examples will be illustrated below.

### (i) Crushing Based on Watering Treatment

In this example, desulfurization slag resulting from a desulfurizing step is simultaneously cooled and crushed using a watering treatment, and is then dried and reused as a desulfurizing agent. Specifically, a watering facility is used to excessively water hot slag resulting from the desulfurizing process until the slag is fully impregnated with water. Subsequently, a drying apparatus is used to completely dry this water-containing slag to obtain a desulfurizing agent having a reduced grain size of 100 mm or smaller. However, a smaller grain size is more preferable, and the maximum grain size is preferably substantially 30 mm or smaller and more preferably 5 mm or smaller. A mechanical crushing operation may be performed before or after the watering and drying steps. Further, in an actual process, mechanical vibration causes at least part of desulfurization slag to be crushed during transportation. Specifically, an apparatus used for drying may be a dryer, or a rotary kiln or the like may be used to perform a large-scale drying operation. The size of the apparatus and the like can be set depending on a required throughput or the like. Any apparatus and method may be used provided that water impregnated into the cooled slag can be sufficiently removed. The thus recycled desulfurization slag is used as a desulfurizing agent.

### (ii) Crushing Based on Watering and Agitating Treatment

ln this example, desulfurization slag resulting from the desulfurizing step is simultaneously cooled and crushed using an appropriate watering and agitating treatment, and is then reused as a desulfurizing agent. That is, a watering facility is used to uniformly water hot slag resulting from the desulfurizing treatment, while using heavy equipment such as a shovel to agitate the slag. Specifically, a watering operation is performed until the hot slag is cooled down to a temperature of about 100°C. The slag is then left cooled to obtain a desulfurizing agent of a reduced grain size of about 100 mm or smaller. However, a smaller grain size is more preferable, and the maximum grain size is preferably substantially 30 mm or smaller and more preferably 5 mm or smaller. A mechanical crushing operation may be performed before or after the watering step. The cooling target temperature is not limited to a particular value, but may be set depending on the required throughput or the like. An appropriate amount of water supplied and agitation reduces the time required to cool the slag. However, if the watering operation is continued even after the temperature decreases below 100°C, then a drying treatment is required. Thus, the watering operation is desirably stopped before the temperature reaches 100°C. Further, the agitation is carried out in order to increase cooling speed and make the watering uniform, so that its frequency may be varied depending on the required treatment time or throughput. The agitation may be omitted.

### (iv) Screening Hot Slag

In this example, while hot at 900 to 1,200°C, desulfurization slag resulting from the desulfurizing step is screened using a sieve (30 x 30 mm to 100 x 100 mm) and is thus separated into metal of a larger diameter containing a slag component and desulfurization slag of a smaller diameter. The criterion for the screening is restricted by the supply apparatus operated when the slag is used as a recovered desulfurizing agent. Typically, the above ranges are appropriate.

After the screening, the desulfurization slag of a reduced diameter is naturally cooled and reused as it is. Even after the screening, about 20 to 30% of Fe component (T.Fe from the slag and metallic Fe) remains. However, this Fe component is introduced into hot metal when it is used for the next desulfurizing step, thereby increasing the yield of iron.

When the metal of a larger diameter containing the above slag components is cooled, an unreacted lime component in the slag component causes the following reaction:

CaO + H₂O = Ca (OH)₂

CaO + CO₂ = CaCO₃

i.e. so-called "powdering" reaction, thereby disintegrating the slag component in the desulfurization slag into a metal component and a slag component. After this step, the above screening operation may be performed again, so that the desulfurization slag can be efficiently separated into large masses of a metal component (containing a small amount of slag component) and a recovered desulfurizing agent (containing a metal component of a smaller diameter). As a result, about 90% of the unreacted lime component in the desulfurization slag is recovered as a recovered desulfurizing agent.

In this case, any sieve can be used without creating any problems provided that it can be operated over a temperature range from 900 to 1,200°C; a sieve made of iron is sufficient. The shape, specification, and the like of this sieve are not limited provided that it can be operated in a desulfurization slag treatment field. Further, the mesh of the sieve is restricted by the supply apparatus in the desulfurizing facility where the slag is used as a recovered desulfurizing agent. An appropriate mesh can be used without creating any problems.

As described above, desulfurization slag can be recovered as an inexpensive lime source by exposing an unreacted lime component and separating large masses of metal from the desulfurization slag without magnetic separation. Furthermore, a recovered desulfurizing agent mainly composed of the desulfurization slag recovered after screening still has a sufficient desulfurizing capability. Therefore, lime can be more effectively utilized by reusing the desulfurization slag a number of times.

### (v) Suppression of Dust

Dried desulfurization slag is very likely to produce dust. However, the inventors note that since desulfurization slag is hot immediately after being produced, most of the slag pieces are massive. That is, a large amount of dust generated can be prevented by properly handling the desulfurization slag, e.g. screening it while it is hot after being generated. A higher temperature is more advantageous to suppression of dust. Slag was actually dropped from a drop height of 3 m with its temperature varied, and the amount of dust generated was measured. Then, it was found that the amount of dust increases rapidly at a temperature of 600°C. Further, in connection with an incidental effect of screening at high temperature, by exposing desulfurization slag to the atmosphere at high temperature, the desulfurization slag can be cooled rapidly and thus powdered. This reduces the subsequent cooling load.

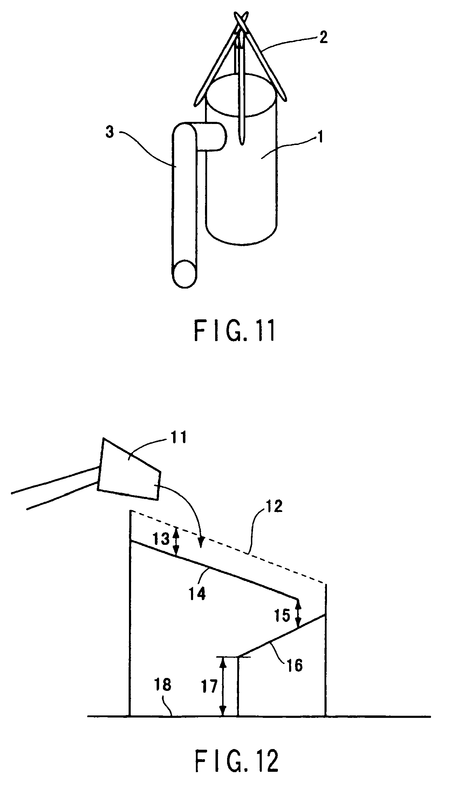

Further, in connection with a facility used for screening, the amount of dust produced can be reduced using a facility that serves to reduce the height from which desulfurization slag is dropped vertically. FIG. 12 shows the configuration of this facility.

This facility is composed of a diagonally arranged net (12), a diagonal plate on which an undersize slides down, and a sliding way (16). This facility is characterized in that the spacing (13) between the net (12) and the diagonal 1 plate (14) is set at 500 mm or smaller in order to reduce the drop height from which desulfurization slag is dropped. Further, the spacing (15) between the diagonal plate (14) and the sliding way (16) is set at 500 mm or smaller. Furthermore, the facility is configured so that the drop height from the sliding way (16) to the ground (18) is set at 1,500 mm or less. This configuration serves to drastically reduce the amount of dust produced. Thus, the amount of dust produced during the treatment can also be reduced by using the above configuration to adjust the grain size (e.g. 70 mm or smaller) of dried desulfurization slag using the simple facility and low operation costs and further screening the slag while it is at a temperature of 600°C or higher.

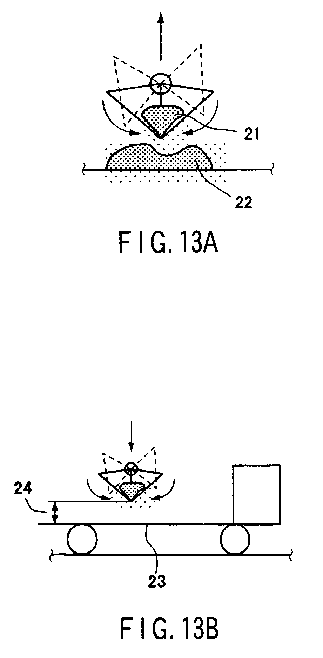

Further, if the desulfurization slag having its grain size adjusted as described above is cooled and then loaded onto a dump truck for recycling, then naturally, it is powdered faster and is very likely to produce dust. Thus, desulfurization slag is loaded using a facility such as the one shown in FIG. 13. A movable basket section (21) is opened in opposite directions and picks up a recovered desulfurizing agent (22). The movable basket section (21) is then closed and carries the picked-up recovered desulfurizing agent to immediately above a carrier (23) of a dump truck, where the movable section (21) is opened. In this case, the drop height (24) is 1.5 m or less so that the desulfurization slag can be loaded onto the dump truck while significantly reducing the amount of dust produced.

### (vi) Suppression of Other Dust

If a recovered dry desulfurizing agent is loaded onto a transport vehicle such as a dump truck for recycling as described above, then naturally, it is powdered faster and is very likely to produce dust. However, the amount of dust produced can be minimized by using a vehicle with a sucking capability instead of the dump truck to transport the recovered desulfurizing agent. Further, the recovered desulfurizing agent can concurrently be sieved by installing a mesh at a suction port during suction, thereby enabling efficient handling and transportation with a reduced amount of dust produced.

Specifically, a suction hose is connected to the vehicle with the sucking capability to suck and load a recovered desulfurizing agent obtained by cooling and crushing desulfurization slag resulting from the hot metal desulfurizing step. At this time, by installing a jig having a mesh for screening at the suction port, the desulfurizing agent can concurrently be sieved so that the required grain size can be obtained. In this case, the jig attached to the suction port during suction may be selected on the basis of the required level of the sieve, i.e. the desired grain size of the recovered desulfurizing agent.

Furthermore, if no screening operation is required during suction, the mesh need not be installed at the suction port, and the desulfurizing agent may be sucked using only the hose.

Moreover, if only large masses of a several tens of cm level must be removed, a simple jig may be used for suction, jig simply having partitions arranged at the tip thereof and formed of metal bars as shown in FIG. 11. An example of such a jig is shown in FIG. 11. This jig is simply composed of a cylinder (1) having the same diameter as that of the hose and metal bars (2) attached to the tip of the cylinder so as to form a cone. The size of the mesh of the sieve and the shape of the jig are not limited and are determined depending on the required grain size, pretreatment step, or the like. Furthermore, to facilitate suction, a nozzle (3) is attached to the jig to suck air. This sucking jig is used to suck the recovered desulfurizing agent, thereby simultaneously achieving the loading and screening operations.

The cooled and crushed recovered desulfurizing agent grains obtained as described above can solely constitute a desulfurizing agent according to the present invention or by being combined with another component as required. That is, the desulfurizing agent according to the present invention may be composed of only the recovered desulfurizing agent grains obtained through the above described steps or may be formed by combining these grains with another component such as lime or fluorite, as required. In the latter case, the amount of another component mixed can be properly determined on the basis of the amount of lime component contained in the recovered desulfurizing agent or the required desulfurization rate. A preferred determining method will be described later.

### (Manufacture of Optimum Desulfurizing Agent)

Now, description will be given of a method of manufacturing the optimum desulfurizing agent using a recovered desulfurizing agent obtained from desulfurization slag. Even with the same recovered desulfurizing agent, the desulfurization rate varies significantly depending on the amount of material added per unit amount of hot metal. However, it has been found that the amount of pure CaO component in the recovered desulfurizing agent has a clear correlationship with the amount of material desulfurized (the amount of S before treatment - the amount of S after treatment).

Thus, even if the components of the recovered desulfurizing agent change, a stable desulfurization rate is obtained by also introducing a pure CaO component into the desulfurizing agent. Then, the ratio of CaO to the recovered desulfurizing agent must be determined. To achieve this, the means described below can be used. Desulfurization slag is roughly divided into a metal component and a slag component. The inventors note that the ratio of the metal component to the slag component varies significantly, whereas the ratio of CaO to the slag component does not vary significantly. That is, the amount of CaO contained can be estimated by determining the ratio of the metal component to the slag component in the recovered desulfurizing agent. Furthermore, the metal has a relatively large specific gravity of about 7, whereas the slag has a specific gravity of only 2 to 3.

This indicates that bulk density increases in proportion to the amount of metal contained. On the basis of this nature, it is easy to cut out a specified volume of recovered desulfurizing agent immediately before use and then weigh it. This weight can be easily reflected in the amount of material introduced. Thus, according to the present invention, the amount of CaO contained in the recovered desulfurizing agent can be estimated promptly and precisely to determine the amount of recovered desulfurizing agent required for desulfurization.

It has been found that when a desulfurizing agent obtained from desulfurization slag is used, even if the components of the recovered desulfurizing agent change, a stable desulfurization rate is obtained by also introducing a pure CaO component into the desulfurizing agent. Accordingly, if the recovered desulfurizing agent contains only a small amount of pure CaO component, the amount of this component added may increase. Consequently, the hot metal temperature becomes inappropriate, the amount of slag discharged increases, and other adverse effects are produced.

Thus, the amount of desulfurizing agent can be reduced by using a desulfurizing agent containing a mixture of a recovered desulfurizing agent with at least one or two of lime (CaO), quick lime (calcium carbonate CaCO₃), and slaked lime (calcium hydroxide Ca(OH)₂). If calcium carbonate (CaCO₃) and calcium hydroxide (Ca(OH)₂) are added, fine fluxes are generated in molten metal owing to the decomposition reaction shown below. Thus, the reaction surface area increases to improve the desulfurization reaction rate. On the other hand, this decomposition reaction is of an endothermal type and causes oxides to be generated, which hinder desulfurization reaction, which is of a reducing type. Accordingly, addition of a large amount of calcium carbonate and calcium hydroxide may reduce the hot metal temperature or hinder the desulfurization reaction. Thus, the amount of these components added must be 40 wt% or less.

Further, the calcium carbonate component may be added by adjusting, when lime is calcined, the level of the calcination so as to leave the calcium carbonate component in the lime. Also in this case, the calcium carbonate component is mixed with the desulfurizing agent so that the total amount of calcium carbonate in the desulfurizing agent is 40 wt% or less. If two or more components are mixed with the desulfurizing agent, the total amount of calcium carbonate component, quick lime, and slaked lime is 40 wt% or less of the total amount of desulfurizing agent. The amount of lime added is not limited and can be freely adjusted depending on the temperature of the hot metal to be treated.

Furthermore, if these components are added, the same effects are produced whether predetermined amounts of these components are mixed together before addition or are separately added to the hot metal. In particular, if the amount of material desulfurized is to be increased in a short time, addition of CaO or the like is more effective if for example, the temperature of the hot metal to be treated is low.

Further, the desulfurizing capability of the desulfurizing agent can further be improved by adding a C source to this recovered desulfurizing agent.

If a C source is added, it acts as a reducing agent to effect the reaction shown below. This facilitates desulfurization to increase desulfurization reaction efficiency.

CaO + S + C → CaS + CO (1)

Further, part of the C source dissolves in the hot metal to increase the amount of heat source that increase the temperature in connection with decarbonization in a converter. Addition of an excessive amount of C source may cause an extra amount of C source to remain, the extra amount exceeding the amount of C source that is required for the above reduction reaction or that needs to dissolve in the hot metal. Consequently, the amount of slag may increase to degrade the quality of operations or the environment. Therefore, the amount of C source added to the desulfurizing agent is desirably 30 wt% or less. Further, the C source used may contain a sulfur component, so that the concentration of S in the hot metal may increase depending on the amount of C source added. In particular, the amount of C source dissolving in the hot metal varies with the temperature of the hot metal. Accordingly, the amount of C source added can be adjusted on the basis of the type of the C source used, the temperature of the hot metal to be treated, the concentration of S in the hot metal, the required amount of material desulfurized, the treatment time, or the like. The C source added is not limited, but any C source may be used such as coal, coke, pitch coke, or plastic.

Furthermore, if these C sources are added, the same effects are produced whether predetermined amounts of these C sources are mixed together before addition or are separately added to the hot metal. The C source can be added whether it is massive, granular, or powdery. However, to easily dissolve in the hot metal, the C source is preferably composed of powders of grain size about 1 mm or smaller.

### (Method of Desulfurizing Hot Metal)

A desulfurizing agent is applied to a hot metal desulfurizing process, the desulfurizing agent containing the recovered desulfurizing agent obtained as described above and the lime source and/or carbon source added as required. The recovered desulfurizing agent can be applied irrespective of the configuration of the hot metal desulfurizing facility or the hot metal desulfurizing method.

The desulfurizing facility using the recovered desulfurizing agent may be based on mechanical agitation (KR method), the injection method (torpedo), or a converter. The main chemical components of the hot metal are [mass % C] = 3.5 to 5.0, [mass % Si] = 0 to 0.3, [mass % S] = 0.02 to 0.05, and [mass % P] = 0.1 to 0.15. The temperature of the hot metal is between 1,250 and 1,450°C. For a treatment, 5 to 300 tons of hot metal is loaded into a refining container. To mix the desulfurizing agent into the hot metal, the recovered desulfurizing agent may be mixed with a lime component before addition, or the recovered desulfurizing agent and the lime component may be cut out from separate hoppers before addition. However, to ensure a certain degree of freedom for operations, it is effective to have a plurality of hoppers. With any refining container, the method used has only to allow the recovered desulfurizing agent and the lime component to be effectively supplied to a bath surface. The amounts of recovered desulfurizing agent and lime component introduced are varied depending on the concentrations of Si, S, and P in the hot metal. The total amount is desirably at most 20 kg/t.

Now, examples of the present invention will be described wherein only the parts covered by the claims form part of the invention. Example 1 (example in which desulfurization slag resulting from a hot metal pretreatment based on the KR method is reused as a desulfurizing agent for a hot metal desulfurizing process based on the KR method)

In this example, desulfurization slag resulting from a desulfurizing step based on the KR method is positively cooled and crushed by the optimum treatment method, and is then reused as a desulfurizing agent for a desulfurizing process based on the KR method. For a recycling treatment, a mechanical crushing treatment, a natural cooling treatment, and a watering treatment are properly combined together. Specifically, the recycling treatment is executed by the following method:

Desulfurization slag resulting from a hot metal pretreatment based on the KR method is first mechanically crushed while hot. Specifically, the desulfurization slag can be crushed using heavy equipment such as a shovel. Furthermore, the hot slag is watered to facilitate cooling and disintegration. Specifically, a watering facility is used for cooling.

Alternatively, the desulfurization slag may be cooled by leavi.ng it as it is without watering. In this case, to facilitate cooling, the desulfurization slag may be spread as thin as possible to increase the contact area thereof which contacts with the atmosphere. Furthermore, reaction of the desulfurization slag with steam or carbon dioxide in the atmosphere may be promoted to facilitate disintegration of a lime component and generation of a compound such as calcium carbonate or calcium hydroxide. Moreover, it is possible to crush the hot slag and then pass it through a sieve to separate large masses such as metal therefrom.

The desulfurization slag resulting from this method was positively treated to facilitate cooling and crushing of the desulfurization slag, thereby generating recovered desulfurizing agent grains of maximum grain size 30 mm or smaller. The grains may further be mechanically crushed.

Since the recovered desulfurizing agent obtained has a maximum grain size of 30 mm or smaller, a surface area is obtained which is enough to be involved in the desulfurization reaction.

Since the grains are appropriately fine, production of dust can be prevented. Further, during reuse with the KR method, a decrease in yield caused by scattering can be prevented. Furthermore, the grains can be properly caught in waves in a bath.

Moreover, generation of a compound such as calcium carbonate or calcium hydroxide can be facilitated by positively promoting cooling and disintegration as described above. When added to the hot metal, these compounds are decomposed while undergoing dehydrating and degassing reaction, to facilitate agitation of the hot metal. Further, the decomposition increases the reaction surface area, thereby improving the desulfurization efficiency.

The above recycling method efficiently provides a desulfurizing agent of grain size 30 mm or smaller having a new surface with a desulfurizing capability. This desulfurizing agent was used in the example.

For comparison, a conventional desulfurizing agent was used which contained 90% of lime and about 5% of fluorite. Table 1 shows the average compositions of the conventional desulfurizing agent as a comparative example and the recovered desulfurizing agent as this example.

These desulfurizing agents were applied to a mechanical agitation type desulfurizing apparatus under the conditions shown in Table 2 to carry out a hot metal desulfurization pretreatment.

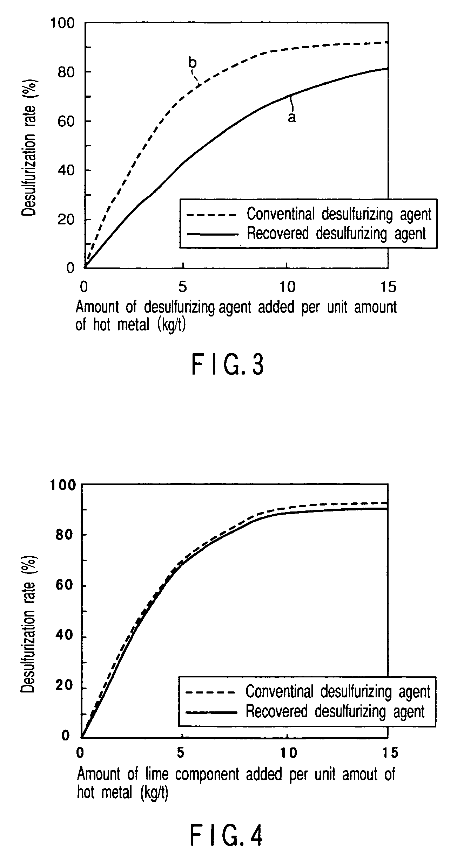

After the hot metal desulfurization, the desulfurization rate achieved by the mechanical agitation type desulfurizing apparatus was checked for each of the desulfurizing agents. FIG. 3 shows the relationship between the amount of additives (fluxes) per unit amount of hot metal and the desulfurization slag rate. In the graph of FIG. 3, a curve a indicates results for the desulfurization slag of the present invention, while a curve b indicates results for the conventional desulfurizing agent as a comparative example.

The graph of FIG. 3 indicates that with an equal amount of desulfurizing agent added per unit amount of hot metal, the desulfurization rate of the recovered desulfurizing agent is about 50 to 90% of that of the comparative desulfurizing agent. Furthermore, FIG. 4 shows comparison based on the amount of lime component added per unit amount of hot metal. This graph indicates that in terms of a contained lime component, the recovered desulfurizing agent has a desulfurizing capability substantially equivalent to that of the comparative desulfurizing agent. Thus, a treatment with the recovered desulfurizing agent is expected to produce a desulfurizing effect equivalent to that of a desulfurizing treatment with lime provided that the amount of lime added per unit amount of hot metal, in the recovered desulfurizing agent added, is estimated to be equivalent to the amount of lime required for the desulfurization reaction.

Table 3 shows changes in the amount of lime used before and after introduction of the present process. The table indicates that the reuse of desulfurization slag reliably reduced the amount of lime used, thereby reducing treatment costs by about 40% compared to the costs required before introduction.

Table 4 shows changes in the amount slag generated before and after introduction of the present process. The amount of slag generated decreased by 3,000 t/month, thereby demonstrating that the present process reduces not only desulfurization costs but also the amount of slag to solve environmental problems.

This example produces significant effects. For example, it reduces the desulfurization costs, allows desulfurization slag to be reused, and reduces the amount of slag generated to solve environmental problems. Therefore, this example has a high industrial value.

### Example 2 (example relating to the desulfurization rate of recycled desulfurization slag and the number of times that the desulfurization slag is recycled)

In this example, desulfurization slag resulting from a desulfurizing step was cooled and crushed by a natural cooling or watering treatment and then reused as a desulfurizing agent during the same process. A recovered desulfurizing agent of grain size 100 mm or smaller and temperature 200°C or lower was obtained without mechanical crushing, and was used as a desulfurizing agent according to this example. Furthermore, the recovered desulfurizing agent was used to carry out desulfurization. The resultant slag was recovered again, and the above method was used to set its size and temperature at 100 mm or smaller and 200°C or lower, respectively. Then, the slag was reused as a desulfurizing agent according to this example.

For comparison, the conventional desulfurizing agent was used which contained 90% of lime and about 5% of fluorite. Table 1 shows the average compositions of the recovered desulfurizing agent and conventional desulfurizing agent used (all tables are shown at the end of the specification).

These desulfurizing agents were applied to the mechanical agitation type desulfurizing apparatus under the conditions shown in Table 2 to carry out a hot metal desulfurization pretreatment.

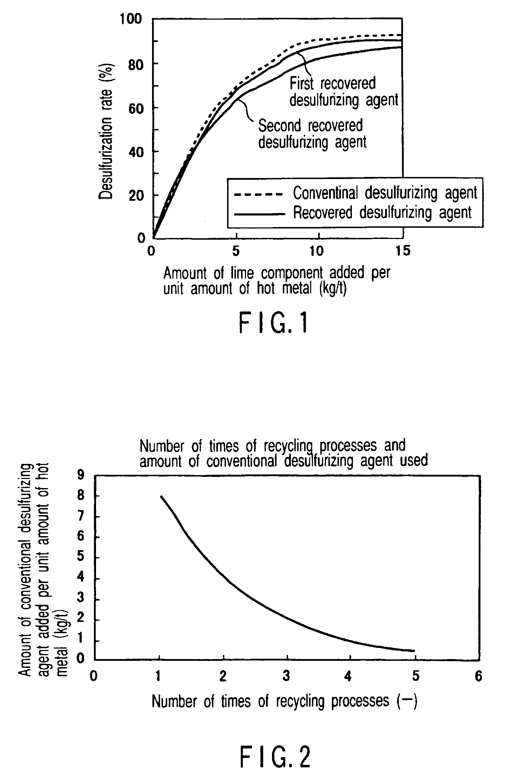

FIG. 1 shows the relationship between the amount of lime added per unit amount of hot metal and the desulfurization rate at each desulfurization level. This figure indicates that the recovered desulfurizing agents resulting from the first and second recycling operations had a desulfurizing capability equal to 80% or more of that of the comparative desulfurizing agent. Thus, even with a treatment using the recovered desulfurizing agent resulting from the second recycling operation, properly increasing the amount of lime added is expected to serve to produce a desulfurizing effect equivalent to that of a desulfurizing treatment with lime.

FIG. 2 shows changes in the amount of desulfurizing agent used before and after introduction of the present process, in connection with the number of desulfurizing agent recycling operations and changes in the amount of recovered desulfurizing agent used. The figure indicates that recycling the desulfurizing agent a number of times served to drastically reduce the amount of recovered desulfurizing agent used. When a recycling operation was preformed about three times, the amount of desulfurizing agent used decreased by about 75% compared to the amount measured before introduction. At the same time, the amount of slag generated decreased drastically, thereby demonstrating that the present process is also effective on environmental problems.

Thus, according to this example, the use of the desulfurizing agent of the present invention reduces desulfurization costs, allows desulfurization slag to be recycled a number of times, and reduces the amount of waste to solve environmental problems.

### Example 3 (cooling and crushing based on a watering treatment)

In this example, desulfurization slag resulting from a desulfurizing step is simultaneously cooled and crushed by a watering treatment, and is then dried and reused as a desulfurizing agent. Specifically, a watering facility is used to excessively water the hot slag subjected to the desulfurizing treatment until the slag is completely impregnated with water. Subsequently, a drying apparatus is used to completely dry the water-containing slag to obtain a desulfurizing agent of a sufficiently reduced grain size of about 5 mm or smaller. Specifically, the apparatus used for drying may be a dryer, or a rotary kiln or the like may be used to perform a large-scale drying operation. The size of the apparatus and the like can be set depending on the required throughput or the like. Any apparatus and method may be used provided that water impregnated into the cooled slag can be sufficiently removed.

The thus recycled desulfurization slag was used as a desulfurizing agent according to this example.

For comparison, the conventional desulfurizing agent was used which contained 90% of lime and about 5% of fluorite. Table 5 shows the average compositions of the recovered desulfurizing agent and conventional desulfurizing agent used.

These desulfurizing agents were applied to the mechanical agitation type desulfurizing apparatus under the conditions shown in Table 2 to carry out a hot metal desulfurization pretreatment.

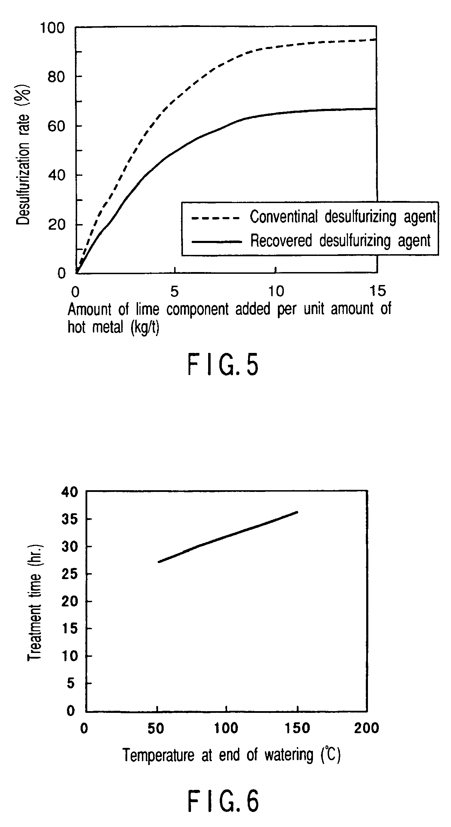

FIG. 5 shows the relationship between the amount of lime added per unit amount of hot metal and the desulfurization rate at each desulfurization level. This figure indicates that with an equal amount of lime introduced per unit amount of desulfurization slag, the recovered desulfurizing agent (indicated by a solid line) has a desulfurizing capability equal to about 70% of that of the comparative desulfurizing agent (indicated by a broken line).

### Example 4 (cooling and crushing based on a watering treatment)

In this example, desulfurization slag resulting from a desulfurizing step is simultaneously cooled and crushed by a watering treatment, and is then reused as a desulfurizing agent. That is, the watering facility is used to uniformly water the hot slag resulting from the desulfurizing treatment, while using heavy equipment such as a shove.1 to agitate the slag. Specifically, the watering treatment is continued until the hot slag is cooled down to a temperature of 80 to 150°C. Subsequently, the slag is left and cooled until its temperature reaches the room temperature. Thus, a desulfurizing agent is obtained which has a sufficiently reduced grain size of 5 mm or smaller. This target cooling temperature is not limited to a certain value, but can be set depending on the required throughput or the like.

For comparison, the conventional desulfurizing agent was used which contained 90% of lime and about 5% of fluorite. Table 7 shows the average compositions of the recovered desulfurizing agent and conventional desulfurizing agent used.

These desulfurizing agents were applied to the mechanical agitation type desulfurizing apparatus under the conditions shown in Table 2 to carry out a hot metal desulfurization pretreatment.

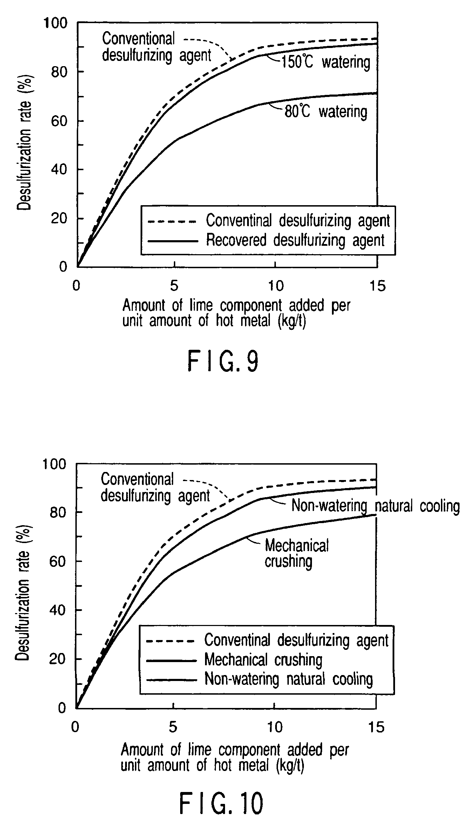

FIG. 9 shows the relationship between the amount of lime added per unit amount of hot metal and the desulfurization rate at each desulfurization level. This figure indicates that with an equal amount of lime added per unit amount of hot metal, the desulfurizing agent recovered by watering the slag until its temperature reaches 150°C has a desulfurizing capability substantially equivalent to that of the comparative desulfurizing agent.

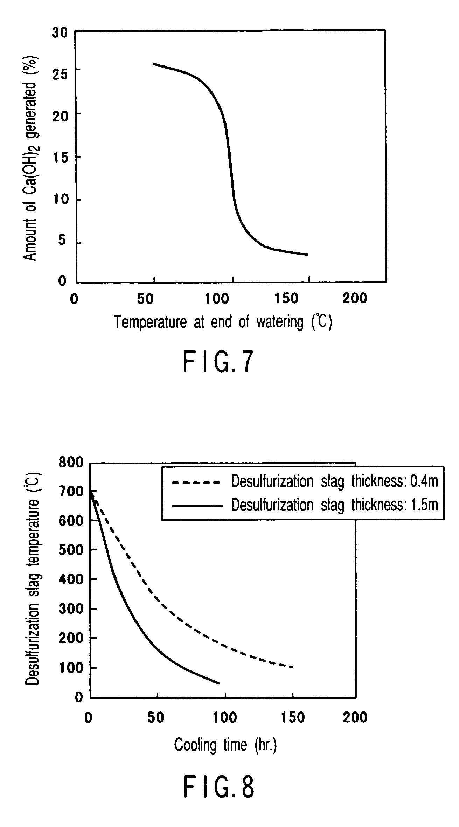

However, even with the same recovered desulfurizing agent subjected to the watering treatment, the desulfurizing capability varies depending on whether the watering treatment is stopped or continued after the temperature reaches 100°C. This is assumed to be because the amount of calcium hydroxide generated in the recovered desulfurizing agent increases significantly if the slag is cooled even after its temperature reaches 100°C and because such an excessive increase in the amount of calcium hydroxide affects desulfurization, as shown in FIG. 7.

In this regard, FIG. 6 shows the relationship between the temperature of the slag measured at the end of watering and the time required to cool 40 T of desulfurization slag down to the room temperature. This figure indicates that more time is required to cool the slag down to the room temperature as the temperature of the slag is higher at the end of watering.

The desulfurization treatment method of this example enables desulfurization slag to be efficiently treated, reduces the time and cost required to recover a desulfurizing agent, and allows a large amount of desulfurization slag to be recycled to reduce the amount of slag, thereby helping solve environmental problems.

### Example 5 (cooling and crushing based on a natural cooling treatment)

In this example, desulfurization slag resulting from a desulfurizing step is simultaneously cooled and crushed by a watering treatment, and is then reused as a desulfurizing agent. Specifically, the hot slag subjected to the desulfurization treatment is left as it is so as to maximize the contact area thereof which contacts with the atmosphere, and is then agitated using heavy equipment such as a shovel. Specifically, a recovered desulfurizing agent of temperature 200°C or lower and a sufficiently reduced diameter can be obtained in three days by spreading the hot slag so that its thickness is 0.5 m or smaller and agitating it about one to three times a day. The thickness during cooling is not limited to this value, but the target thickness can be set depending on the required treatment time or throughput, the area of a place that is available for the recycling treatment, or the like. Further, the agitation is carried out to increase the cooling speed, so that its frequency may also be varied depending on the required treatment time or throughput. The agitation may be omitted if much treatment time and throughput are available. This desulfurizing agent was used as one according this example.

Furthermore, a recovered desulfurizing agent is similarly obtained if the slag is left as it is without reducing its thickness. This is also shown as a desulfurizing agent according to this example.

Further, for comparison in terms of the cooling method, mechanically crushed desulfurization slag (a mechanically crushed agent) was used.

Furthermore, for comparison in terms of desulfurizing behavior, the conventional desulfurizing agent was used which contained 90% of lime and about 5% of fluorite. Table 8 shows the average compositions of the recovered desulfurizing agent and conventional desulfurizing agent used.

These desulfurizing agents were applied to the mechanical agitation type desulfurizing apparatus under the conditions shown in Table 2 to carry out a hot metal desulfurization pretreatment.

FIG. 10 shows the relationship between the amount of lime added per unit amount of hot metal and the desulfurization rate at each desulfurization level. This figure indicates that with an equal amount of lime added per unit amount of hot metal, the desulfurizing agent recovered by executing natural cooling has a desulfurizing capability substantially equivalent to that of the comparative desulfurizing agent.

Further, even with the same non-watering treatment, the desulfurization capability of the mechanically crushed recovered desulfurizing agent is inferior to that of the recovered desulfurizing agent which has been naturally cooled. This is assumed to be because the recovered desulfurizing agent which has been naturally cooled contains several percent of calcium carbonate generated therein as shown in Table 8 and because during the desulfurizing treatment, decomposition of calcium carbonate facilitates agitation of the hot metal and increases the reaction surface area to improve the desulfurization efficiency.

Comparison of the desulfurizing capability of the recovered desulfurizing agent and the time required for the recycling treatment will be shown below in connection with the different methods of recovering desulfurization slag shown in Examples 3 to 5.

Even with the same recovered desulfurizing agent, a higher desulfurization capability is obtained by crushing slag by watering (at 150°C) than by mechanically crushing it. This is assumed to be because the recovered desulfurizing agent crushed by watering contains several percent of calcium carbonate generated therein and because during the desulfurizing treatment, decomposition of calcium carbonate facilitates agitation of the hot metal and increases the reaction surface area to improve the desulfurization efficiency.

However, with the same recovered desulfurizing agent subjected to the watering treatment, the desulfurization capability varies depending on whether the watering operation is controlled (150°C) or is continued until the desulfurizing agent is completely impregnated with water. This is assumed to be because cooling the desulfurization slag down to a temperature of 100°C or lower significantly increases the amount of calcium hydroxide (Ca(OH)₂) generated in the recovered desulfurization slag and because such an excessive increase in the amount of calcium hydroxide affects desulfurization.

Further, Table 6 shows a comparison of the treatment conditions for the desulfurization slag and the time required to treat about 40 T of desulfurization slag. This table indicates that the watered desulfurization slag is cooled much faster than that left as it is without undergoing watering. The table also indicates that the watering-based treatment allowed the slag to be perfectly crushed within the time required for cooling. Furthermore, controlling the amount of water supplied eliminates the need for a drying treatment after the watering treatment, thereby saving the facilities, cost, and time required for crushing and drying. Further, watering during the treatment prevents production of dust from the desulfurization slag being treated.

On the other hand, with the natural cooling treatment for the slag without watering, the required treatment time is 170 hours if the thickness of the desulfurization slag is 1.5 m but decreases dramatically down to 70 hours if the thickness is 0.4 m. In this regard, FIG. 8 shows the relationship between the treatment time and the temperature for the different thicknesses for the respective treatments (the solid line indicates a thickness of 0.4 m, while the broken line indicates a thickness of 1.5 m). The treatment speed increases with decreasing thickness. However, the thickness is determined on the basis of the required cooling speed, the area of a place available for cooling, or the like. The non-watering treatment method according to the present invention requires slightly more time than the watering treatment, but does not require any watering facilities. Further, with the watering treatment, it is difficult to uniformly water the slag in the case of bulk treatment, possibly resulting in water-containing slag. It is thus difficult to provide such control that such slag is not generated. Problems with the water-containing slag are that it is difficult to handle after the recovery treatment, that flame is generated when it is introduced, that it has an inadequate desulfurizing capability, and the like. On the other hand, the non-watering natural cooling treatment method allows the slag to be easily uniformly treated even in the case of bulk treatment. This method also causes the lime component in the slag to be "powdered" (part of the lime component in the slag reacts with moisture or carbon dioxide in the atmosphere during the natural cooling operation to change the volume of the slag, which thus becomes powdery), so that the grain size of the slag decreases as the time elapses. This eliminates the need for mechanical crushing after the cooling treatment. Furthermore, part of the lime component in the slag reacts with carbon dioxide in the atmosphere to generate calcium carbonate, which is effective in improving the desulfurization reaction efficiency.

As described above, by effectively using the desulfurization slag treatment method of this example according to the conditions such as the amount of desulfurization slag to be recovered and the available facilities, the desulfurization slag can be inexpensively and efficiently treated to reduce the time and cost required to recover the desulfurization slag. This in turn allows a large amount of desulfurization slag to be recycled and drastically reduces the amount of slag to solve environmental problems.

### Example 6 (screening desulfurization slag after separation of metal)

In this example, while hot at 900 to 1,200°C, desulfurization slag resulting from a desulfurizing step is screened using a screening apparatus 12 with a □70-mm mesh, and is thus separated into desulfurization slag of a smaller diameter containing a large amount of unreacted lime and metal of a larger diameter. In this case, any sieve can be used without creating any problems provided that it can be operated over a temperature range from 900 to 1,200°C; a sieve made of iron is sufficient. The shape, specification, and the like of this sieve are not limited provided that it can be operated in a desulfurization slag treatment field. Further, the mesh of the sieve is restricted by the supply apparatus in the desulfurizing facility where the slag is used as a desulfurizing agent. An appropriate mesh can be used without creating any problems.

The sieved desulfurization slag of a small diameter is cooled and then transported, as a recovered desulfurizing agent, to the supply apparatus on the desulfurizing facility, where it is used.

On the other hand, the residual metal can be easily recovered using the above described method. Further, this metal can then be reused as an iron source for the hot metal pretreatment step, thereby significantly contributing to increasing the yield of iron.

In this example, desulfurization slag was recovered under conditions such as those shown in Table 9. The sieve was angularly installed relative to a horizontal surface. Hot slag was screened by dropping it from the top of the sieve. Table 10 shows the mass balance of a desulfurizing agent during its recovery process. It has been confirmed that even if the desulfurization slag resulting from the desulfurizing step is sieved, about 90% of CaO in the desulfurization slag is recovered, with the metal component effectively removed. That is, the method of the present invention has proved to enable the slag component in the desulfurization slag to be effectively recovered without magnetic separation.

The recovered desulfurizing agent and the lime were applied to the desulfurizing treatment, and desulfurizing behavior was checked. For some levels, the mixture of the recovered desulfurizing agent with the lime was carried out in two manners. That is, these components were mixed together and then loaded into a hopper and then a certain part of the mixture was cut out, or a recovered desulfurizing agent and a lime component were cut out from the respective hoppers. Table 17 also shows the average composition of a lime-based desulfurizing agent as a conventional example. These desulfurizing agents were applied to the mechanical agitation type desulfurizing apparatus under test conditions shown in Table 11 to carry out hot metal desulfurization.

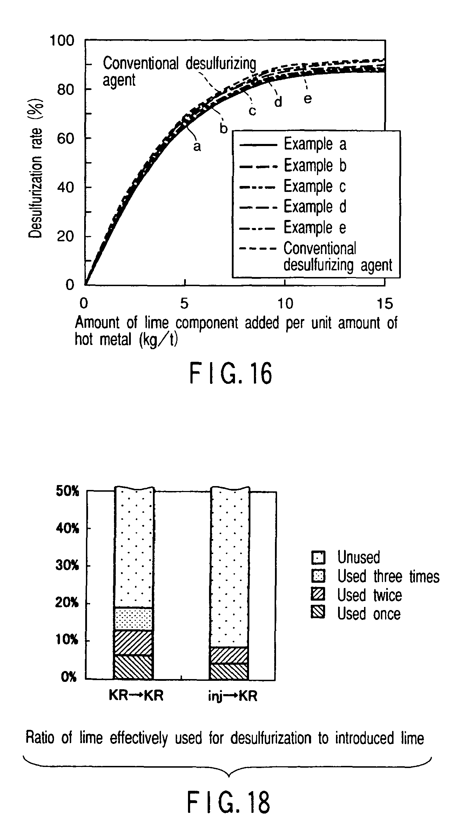

FIG. 16 shows the relationship between the amount of lime added per unit amount of hot metal and the desulfurization rate. The concentration of the lime component in the recovered desulfurization slag is lower than that of the comparative example, so that the amount of desulfurizing agent introduced is larger in this example than in the comparative example. However, the desulfurizing capability of this example is equivalent to that of the comparative example, thereby demonstrating the effectiveness of the present invention.

Then, to examine the effects of the temperature of the desulfurization slag on dust, the hot slag was left as it was for 30 minutes to 4 hours and was then passed through the screening apparatus 12, previously described. Then, it was checked how dust was produced and how the temperature changed. Table 14 shows how dust was produced when the slag was screened with its temperature changed. The table indicates that production of dust changed significantly after pre-screening temperature reached 600°C. This nature can be utilized to perform a screening operation or the like without any dust collectors. Further, Table 15 shows the result of measurement of a decrease in temperature during the screening operation. During screening, the temperature decreases by about 100°C, thus reducing the time required for cooling. Further, Table 16 shows how dust was produced in the screening facility according to the present invention and in a screening facility that does not have the diagonal plate (14) or sliding way (16), shown in FIG. 12.

With the screening operation according to the present invention, even desulfurization slag that is likely to produce dust at a temperature of 600°C or lower can be screened without any dust collectors. The method of this example significantly simplify a facility which is used to recycle desulfurization slag and which adjusts the grain size of dry desulfurization slag. Further, production of dust can be prevented during screening using a simple facility. Furthermore, during screening, the slag efficiently contacts with the atmosphere and is thus efficiently cooled. Moreover, by loading the desulfurization slag onto a dump truck using the loading method described herein, the loading operation can be achieved while preventing production of dust without any dust collectors.

The treatment of this example enables the desulfurizing agent to be inexpensively and efficiently treated and reduces the amount of desulfurization slag to be treated compared to the prior art, thereby drastically reducing costs. Other significant effects of this example are the possibility of recovering and recycling a large amount of desulfurization slag and a decrease in the amount of slag, which leads to solution or environmental problems.

### Example 7 (handling of a recovered desulfurizing agent)

If a recovered dry desulfurizing agent is loaded onto a dump truck for recycling, then naturally, it is powdered faster and is very likely to produce dust. However, the amount of dust produced can be minimized by using a vehicle with a sucking capability instead of the dump truck to transport the recovered desulfurizing agent. Further, the recovered desulfurizing agent can concurrently be screened by installing a mesh at a suction port during suction, thereby enabling efficient handling and transportation with a reduced amount of dust produced.

Specifically, a suction hose is connected to the vehicle with the sucking capability to suck and load a recovered desulfurizing agent obtained by cooling and crushing desulfurization slag resulting from the hot metal desulfurizing step. At this time, by installing a jig having a mesh for screening at the suction port, the desulfurizing agent can concurrently be screened so that the required grain size can be obtained. In this case, the jig attached to the suction port during suction may bc selected on the basis of the required level of the sieve, i.e. the desired grain size of the recovered desulfurizing agent.

Furthermore, if no screening operation is required during suction, the mesh need not be installed at the suction port, and the desulfurizing agent may be sucked using only the hose.

Moreover, if only large masses of a several tens of cm level must be removed, the recovered desulfurization slag was simultaneously loaded and sieved on the basis of the sucking operation using a simple jjg only having partitions arranged at the tip thereof and formed of metal bars as shown in FIG. 11. In this example, desulfurization slag resulting from the mechanical agitation type desulfurizing step was used. The desulfurization slag was left to be naturally cooled in a building for about 6 days. During this period, to facilitate cooling, the desulfurization slag was agitated about three times a day.

The hose used for suction had a diameter of 15 cm, and the jig 11 attached to the suction port during suction included two nets with a 30- and 5-mm meshes and a conical jig. These jigs all had an air suction port. Furthermore, as a comparative example, the desulfurization slag was sucked using only the hose and without any jigs. Further, Table 12 shows the specification of the suction vehicle used.

Table 13 shows throughput and suction performance as results for suction of a recovered desulfurizing agent using the various types of suction ports previously described. These results indicate that the recovered desulfurizing agent can be efficiently loaded at a rate of about 1 t/min. while being simultaneously sieved, whichever suction port is used. Further, it has been confirmed that during suction, the temperature of the recovered desulfurizing agent decreases by about 30°C after the treatment as a result of the positive contact of the desulfurizing agent with the atmosphere.

Furthermore, most of the sieved large masses and the slag on the sieve are metal and can thus be used for another process.

It has been ascertained that with the handling method of the present invention, even a recovered desulfurizing agent which is composed of fine powders and which is likely to produce dust can be simultaneously and efficiently sieved and loaded onto a transport vehicle without using any dust collectors.

In this example, with the desulfurizing agent treating method used to recycle desulfurization slag, a transport vehicle with a sucking capability can be used to load a recovered desulfurizing agent while minimizing the amount of dust produced. Furthermore, the recovered desulfurizing agent can be efficiently treated by simultaneously performing a sucking and screening operations. Moreover, the recovered desulfurizing agent efficiently contacts with the atmosphere or suction air and is thus efficiently cooled.

### Example 8 (measurement of the content of CaO in desulfurization slag)

In this example, desulfurization slag resulting from a mechanical agitation type desulfurizing step was used. The desulfurization slag was passed through the screening apparatus composed of a net with a □70-mm mesh.

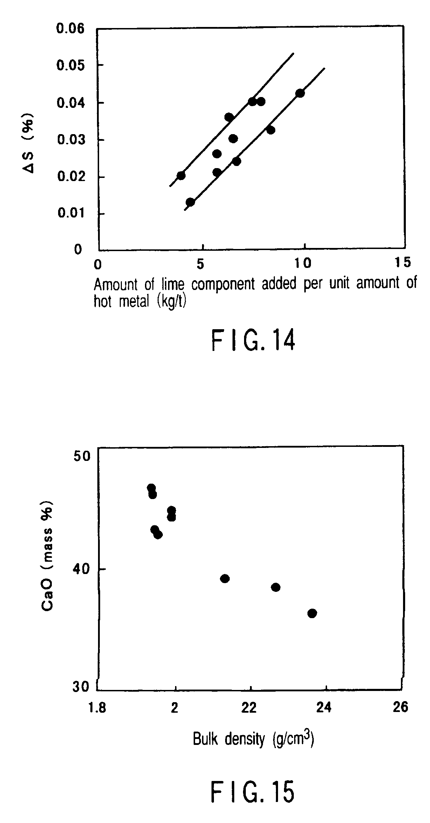

The following are the results of the reuse, in a mechanical agitation type desulfurizing facility, of the recovered desulfurizing agent having its grain size adjusted. FIG. 14 shows the relationship between the amount of pure CaO component and the amount of material desulfurized ΔS (the amount of sulfur before treatment (S) - the amount of sulfur after treatment (S)). It has been found that the amount of pure CaO component has a clear correlationship with the amount of material desulfurized. This nature can be utilized to easily determine the amount of desulfurizing agent introduced depending on the amount of sulfur before treatment (S), thereby achieving a stable desulfurization rate.

Further, FIG. 15 shows the relationship between the bulk density and the CaO mass %. This figure indicates that the bulk density decreases with increasing amount of CaO. This tendency can be utilized to estimate the CaO mass % of the recovered desulfurizing agent by measuring the bulk density thereof.

According to this example, when desulfurization slag was reused in the mechanical agitation type desulfurizing facility, the required amount of desulfurizing agent could be determined promptly, while achieving a stable desulfurization rate.

### Example 9 (example relating to improvement of desulfurization efficiency by addition of a lime source (CaO, CaCO₃, Ca(OH)₂)

Desulfurization slag resulting from a desulfurizing step was cooled and crushed by a natural cooling or watering treatment to obtain a desulfurizing agent (hereinafter referred to as a "recovered desulfurizing agent"). One or more of the above-described desulfurizing agents were added to the recovered desulfurizing agent, which was then used as a desulfurizing agent according to this example. In a comparative example, only the recovered desulfurizing agent was used. Table 18 shows the amount of recovered desulfurizing agent added, the types of desulfurizing agents, and the amounts of desulfurizing agents added.

These desulfurizing agents were applied to the mechanical agitation type desulfurizing apparatus under the test conditions shown in Table 19 to carry out hot metal desulfurization.

FTG. 19 shows the relationship between the amount of time component added per unit amount of hot metal and the desulfurization rate at each desulfurization level. This figure indicates that with an equal amount of lime added per unit amount of hot metal, the use of the (d) recovered desulfurizing agent + lime slightly increases the desulfurization rate compared to the use of (a) only the recovered desulfurizing agent. The FIG. also indicates that the use of the (b) recovered desulfurizing agent + CaCO₃, the (c) recovered desulfurizing agent + CaCO₃ + Ca(OH)₂, or the (e) recovered desulfurizing agent + lime + CaCO₃ + Ca(OH)₂ increases both the amount of CaCO₃ and Ca(OH)₂ added and the desulfurization rate compared to the use of (a) only the recovered desulfurizing agent. This is assumed to be because during the desulfurizing treatment, decomposition of CaCO₃ or Ca(OH)₂ increases the reaction surface area or facilitates agitation of hot metal to improve the desulfurization efficiency, as previously described.

Table 20 shows the ratio of CaO to the recovered desulfurizing agent, the amount of recovered desulfurizing agent added, the types of desulfurizing agents, the amounts of desulfurizing agents added, and the total amount of desulfurizing agents which are measured if 8 kg-CaO/T of lime component is contained in the desulfurizing agents of the compositions used in this example. If each desulfurizing agent requires the same amount of lime component, when only the recovered desulfurizing agent is used, a large amount of desulfurizing agent is required if the recovered desulfurizing agent contains only a small amount of pure lime component. However, addition of lime and calcium carbonate or calcium hydroxide improves the desulfurization slag rate and reduces the amount of desulfurizing agent used. This reduces the amount of slag discharged after the treatment. Furthermore, the compositions of the desulfurizing agents can be freely adjusted according to the state of the hot metal to be treated or the required treatment conditions. Moreover, similar effects are produced even if these desulfurizing agents are separately added to the hot metal instead of being mixed together.

### Example 10 (example relating to improvement of desulfurization efficiency by addition of various carbon sources)

Desulfurization slag resulting from a desulfurizing step was cooled and crushed by a natural cooling or watering treatment to obtain a desulfurizing agent (hereinafter referred to as a "recovered desulfurizing agent"). Various C sources were added to the recovered desulfurizing agent, which was then used as a desulfurizing agent according to this example. Table 21 shows the amount of recovered desulfurizing agent added, the types of desulfurizing agents, and the amounts of desulfurizing agents added. The C sources were composed of powders of grain size 1 mm or smaller.

These desulfurizing agents were applied to the mechanical agitation type desulfurizing apparatus under the test conditions shown in Table 22 to carry out hot metal desulfurization.

FIG. 20 shows the relationship between the amount of lime component added per unit amount of hot metal and the desulfurization rate at each desulfurization level. This figure indicates that with an equal amount of lime added per unit amount of hot metal, the use of the (d) to (d) recovered desulfurizing agent + C source increases the desulfurization rate linearly with the amount of C source added, compared to the use of (a) only the recovered desulfurizing agent. It has also been confirmed that equivalent effects are produced regardless of the type of the C source or the method of adding the C source. This is assumed to be because the C source acts as a reducing agent during the desulfurizing step to improve the desulfurization rate, as previously described. Further, part of the C source dissolved in the hot metal to increase the concentration of C in the hot metal by 0.1 to 0.5% in each case under the conditions of this example.

By thus adding a C source such as anthracite or coke, the desulfurization rate can be improved while reducing the amount of slag discharged after the treatment. Any C source may be used, such as coal, coke, pitch coke, or plastic. Furthermore, the compositions of the desulfurizing agents can be freely adjusted according to the state of the hot metal to be treated or the required treatment conditions. Moreover, similar effects are produced even if these desulfurizing agents are separately added to the hot metal instead of being mixed together.

### Industrial Applicability

As described above, the present invention provides a method of desulfurizing hot metal, which method effectively reuses desulfurization slag resulting from a hot metal desulfurizing treatment in order to reduce the costs of hot metal desulfurization and the amount of slag generated. Further, the present invention provides a desulfurizing agent that allows a hot metal desulfurizing treatment with a reduced amount of slag generated to be inexpensively carried out. The present invention produces significant effects. For example, it reduces desulfurization costs, allows desulfurization slag to be recycled, and reduces the amount of slag to solve environmental problems. Therefore, the present invention has a high industrial value.

**Table 1 Main components of average conventional desulfurizing agent and recovered desulfurizing agent**

| Main component | T-Fe | CaO | SiO₂ | Al₂O₃ | T-S | CaF₂ |
|---|---|---|---|---|---|---|
| (1) Conventional desulfurizing agent | - | 90.0 | - | - | - | 5.0 |
| (2) Recovered desulfurizing agent | 19.2 | 53.6 | 9.3 | 4.1 | 1.7 | 2.1 |
| (3) Desulfurization slag resulting from recovered desulfurizing agent-used defulfurizing treatment | 19.7 | 45.0 | 12.0 | 11.0 | 3.2 | 2.2 |

| | | | | | | |
|---|---|---|---|---|---|---|
| (unit: mass%) | | | | | | |

**Table 2 Test conditions**

| Item | Contents |
|---|---|
| Desulfurizing method | Mechanically agitating type desulfurizing apparatus |
| Treatment Container | Hot metal ladle |
| Throughput | 140 - 160t |
| Hot metal temperature | 1300 - 1450°C |
| Hot metal [S] | 0.05 - 0.02% |
| Amount of desulfurizing agent desulfurizing agent | 0 to 30 kg - CaO/t |

**Table 3 KR desulfurization treatment conditions**

| Item | Before introduction of recycling process | After introduction of recycling process |
|---|---|---|
| Hot metal [S] | 0.05 - 0.02% | 0.05 - 0.02% |
| Amount of lime used | 8 kg/t | 3 - 5 kg/t |
| Amount of desulfurizing agent used | - | 8 kg - CaO/t |

**Table 4 Changes in amount of slag generated associated with introduction of desulfurization recycling process**

| | Amount of slag generated (t/month) |
|---|---|
| Before recycling | 8000 |
| After recycling | 4000 |
| Amount of decrease in amount of slag generated | 4000 |

**Table 5 Main components of average conventional desulfurizing agent and recovered desulfurizing agent**

| Main component | Conventional desulfurizing agent | Drying after watering |
|---|---|---|
| CaO | 90.0 | 53.6 |
| T-Fe | - | 19.2 |
| SiO₂ | - | 9.3 |
| Al₂O₃ | - | 4.1 |
| T-S | - | 1.7 |
| CaF₂ | 5.0 | 2.1 |
| CaCO₃ | - | 2.3 |
| Ca(OH)₂ | - | 18.3 |

| | | |
|---|---|---|
| (Unit:mass%) | | |

**Table 6 Time required for desulfurizing treatment method and 40T treatment**

| | Watering | | | Non-watering | | |
|---|---|---|---|---|---|---|
| Treatment method | Watering | | Drying after watering | Natural cooling | | Mechanical crushing |
| | 150°C | 80°C | | Desulfurization slag thickness 1.5m | Desulfurization slag thickness 0.4m | |
| Amount of water supplied (t) | 8 | 15 | 30 | - | | - |
| Mechanical crushing | Not required | | Not required | Not required | | Required |
| Drying | Not required | | Required | Not required | | Not required |
| Time required to cool slag down to 100°C | 30 | 24 | 10 | 170 | 70 | 50 |

**Table 7 Main components of average conventional desulfurizing agent and recovered desulfurizing agent**

| Main component | Conventional desulfurizing agent | watered agent (150°C) | watered agent (80°C) |
|---|---|---|---|
| CaO | 90.0 | 53.6 | 53.6 |
| T-Fe | - | 19.2 | 19.2 |
| SiO₂ | - | 9.3 | 9.3 |
| Al₂O₃ | - | 4.1 | 4.1 |
| T-S CaF₂ | - | 1.7 | 1.7 |
| | 5.0 | 2.1 | 2.1 |
| CaCO₃ Ca(OH)₂ | - | 5.2 | 1.1 |
| | - | 3.3 | 24.1 |

| | | | |
|---|---|---|---|
| (Unit:mass%) | | | |

**Table 8 Main components of average conventional desulfurizing agent and recovered desulfurizing agent**

| Main component | Conventional desulfurizing agent | Non-watered and naturally cooled agent | Non-watered mechanically crushed agent |
|---|---|---|---|
| CaO | 90.0 | 53.6 | 53.6 |
| T-Fe | - | 19.2 | 19.2 |
| SiO₂ | - | 9.3 | 9.3 |
| Al₂O₃ | - | 4.1 | 4.1 |
| T-S | - | 1.7 | 1.7 |
| CaF₂ | 5.0 | 2.1 | 2.1 |
| CaCO₃ | - | 6.5 | 0.4 |
| Ca(OH)₂ | - | 2.5 | 0.5 |

| | | | |
|---|---|---|---|
| (Unit:mass%) | | | |

**Table 9 Recovery treatment conditions for desulfurization slag**

| | |
|---|---|
| Desulfurization slag temperature | 600 - 1200°C |
| Sieve | Made of iron, mesh 70 mm X 70 mm |
| Sieve angle | 8 - 15° |
| Throughput | 2t/times |

**Table 10 Changes in composition during recovery process**

| | | Conventional desulfurizing agent | Hot slag (before screening) | Recovered desulfurizing agent |
|---|---|---|---|---|
| Weight ratio | Metal component % | 0 | 20 | 7.2 |
| | Slag component % | 100 | 80 | 92.8 |
| Slag composition | CaO | 90 | 54 | 53.8 |
| | T-Fe | - | 18.5 | 18.2 |
| | SiO₂ | - | 9.0 | 8.8 |
| | Al₂O₃ | - | 4.1 | 4.1 |
| | T-S | - | 1.7 | 1.8 |
| | CaF₂ | 5 | 2.1 | 1.8 |
| | CaCO₃ | - | 0.4 | 1.3 |
| | Ca(OH)₂ | - | 0.5 | 1.0 |

| | | | | |
|---|---|---|---|---|
| (unit: mass%) | | | | |

**Table 11 Test conditions**

| Item | Contents |
|---|---|
| Desulfurizing method | Mechanically agitating type desulfurizing apparatus |
| Refining container | Hot metal ladle |
| Throughput | 130 - 165t |
| Hot metal temperature | 1300 - 1450°C |
| Initial [S] in hot metal | 0.02 - 0.05% |
| Agitation time | 5 to 7 minutes |
| Amount of desulfurizing agent | 6 - 30 kg/t |

**Table 12 Specification of suction vehicle**

| | |
|---|---|
| Suction air quantity | 80 m³ |
| Vacuum pressure | -650 mmHg |
| Suction tank capacity | 5.5 m³ |
| Connection hose diameter | 15 cm |

**Table 13 Sucking method and Recovered desulfurizing agent loading capability**

| Sucking method | | Amount of recovered desulfurizing agent sucked (t) | Suction time (min.) | Sucking capability (t/min.) |
|---|---|---|---|---|
| Diameter of hose used | Suction port type | | | |
| 15 cm | 5 mm mesh | 14.2 | 14.7 | 1.00 |
| 15 cm | 30 mm mesh | 22.4 | 20.13 | 1.11 |
| 15 cm | Cone-shaped | 6.00 | 5.10 | 1.18 |
| 15 cm | Cone-shaped | 16.2 | 16.2 | 1.00 |
| 15 cm | Cone-shaped | 11.1 | 12.5 | 0.89 |
| 15 cm | Cone-shaped | 29.7 | 33.2 | 0.89 |
| 15 cm | Cone-shaped | 15.0 | 15.9 | 0.94 |
| 15 cm | Only hose | 13.8 | 9.8 | 1.40 |

**Table 14 Screening temperature and dust generation**

| Temperature before screening | Dust generation |
|---|---|
| 420°C | Large |
| 610°C | Small |
| 940°C | Very little |

**Table 15 Decrease in temperature during screening**

| | Before screening | After screening | Decrease in temperature |
|---|---|---|---|
| 1 | 930°C | 790°C | Δ 140°C |
| 2 | 940°C | 880°C | Δ 60°C |
| 3 | 940°C | 860°C | Δ 80°C |

**Table 16 Dust generation observed when present facility is used**

| | Slag temperature | Dust generation |
|---|---|---|
| Present screening facility | 450°C | Little |
| Screening facility without diagonal plate or sliding way | 480°C | Very large |

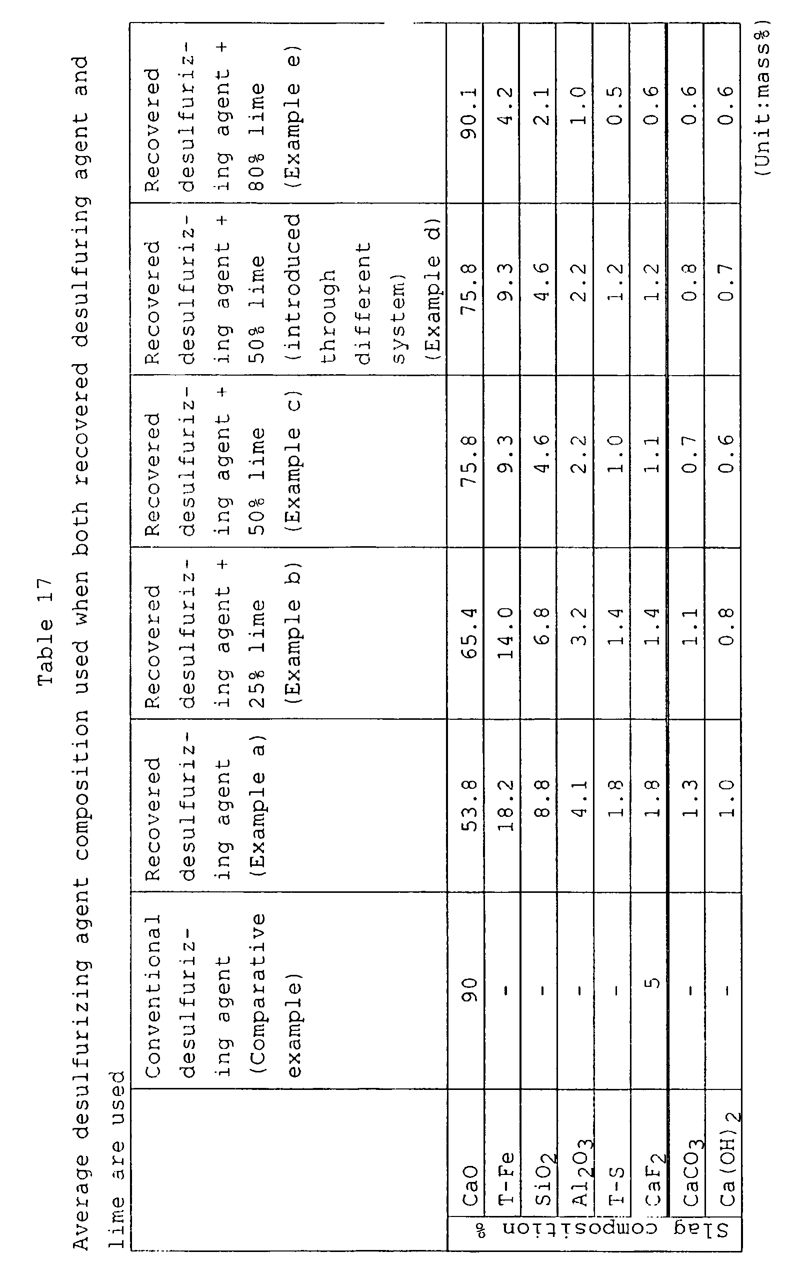

**Table 18 Average desulfurizing agent composition used when both recovered desulfurizing agent and lime source**

| Example | Recovered desulfurizing agent | Lime | CaCO₃ | Ca(OH)₂ |
|---|---|---|---|---|
| a | 100 | - | - | - |
| b | 70 | - | 30 | - |
| c | 60 | - | 20 | 20 |
| d | 50 | 50 | - | - |
| e | 30 | 50 | 10 | 10 |

| | | | | |
|---|---|---|---|---|
| (Unit:mass%) | | | | |

**Table 19 Test conditions**

| Item | Contents |
|---|---|
| Desulfurizing method | Mechanically agitating type desulfurizing apparatus |
| Treatment container | Hot metal ladle |
| Throughput | 140 - 160t |
| Hot metal temperature | 1300 - 1450°C |
| Hot metal [S] | 0.05 - 0.02% |

**Table 20 Amounts of recovered desulfurizing agent and lime source added when 8.0 kg/T of CaO component is required in desulfurizing agent**

| Recovered desulfurizing agent | | | Added desulfurizing agent | | | | | | Total amount of desulfurizing agent | CaO component in desulfurizing agent |
|---|---|---|---|---|---|---|---|---|---|---|
| | | | Lime | | CaCO₃ | | Ca(OH)₂ | | | |
| Amount of recovered desulfurizing agent added | | CaO component | Amount of lime added | | Amount CaCO₃ | of added | Amount of Ca(OH)₂ added | | | |
| wt% | kg/T | wt% | wt% | kg/T | wt% | kg/T | wt% | kg/T | kg/T | kg/T |
| 100 | 11.4 | 70 | - | - | - | - | - | - | 11.4 | 8.0 |
| | 20.0 | 40 | - | - | - | - | - | - | 20.0 | |
| 70 | 12.5 | 40 | - | - | 30 | 5.4 | - | - | 17.9 | |
| 60 | 9.5 | 40 | - | - | 20 | 3.2 | 20 | 3.2 | 15.9 | |
| 50 | 5.7 | 40 | 50 | 5.7 | - | - | - | - | 11.4 | |
| 30 | 3.2 | 40 | 50 | 5.3 | 10 | 1.1 | 10 | 1.1 | 10.6 | |

| | | | | | | | | | | |
|---|---|---|---|---|---|---|---|---|---|---|
| (Unit:mass%) | | | | | | | | | | |

**Table 21 Average desulfurizing agent composition used when both recovered desulfurizing agent and C source are used**

| | Recovered desulfurizing agent | C source | | |
|---|---|---|---|---|
| | | Type | Amount of C source added | Adding method |
| Example | 100 | - | 0 | - |
| a | 95 | Coke | 5 | Mixture |
| b | 95 | Anthracite | 5 | Mixture |
| c | 80 | Coke | 20 | Mixture |
| d | 70 | Coke | 30 | Separate addition |

| | | | | |
|---|---|---|---|---|
| (Unit:mass%) | | | | |

**Table 22 Test conditions**

| Item | Contents |
|---|---|
| Desulfurizing method | Mechanically agitating type desulfurizing apparatus |
| Treatment container | Hot metal ladle |
| Throughput | 190 - 160t |
| Hot metal temperature | 1300 - 1450°C |
| Hot metal [S] | 0.05 - 0.02% |

## Claims

1. A method of manufacturing a hot metal desulfurizing agent, the method comprising executing a treatment for creating a new surface by water cooling in desulfurization slag resulting from a mechanical agitation type hot metal desulfurizing treatment, **characterized in that** the step of executing the treatment for creating a new surface by water cooling comprises a step of watering the desulfurization slag, and this watering step controls the amount of water provided so as to maintain the temperature of the desulfurization slag at 100°C or higher at the end of the watering, so that only by means of cooling based on the watering, the aggregate of desulfurization slag can be separated into desulfurization slag grains and/or the desulfurization slag grains can be crushed.

2. A method of manufacturing a hot metal desulfurizing agent for use in a mechanical agitation type hot metal desulfurizing treatment according to claim 1, the method being **characterized by** comprising executing a treatment for creating a new surface in desulfurization slag resulting from the mechanical agitation type hot metal desulfurizing treatment.

3. A method according to claim 1, **characterized by** comprising a step of providing desulfurization slag resulting from the mechanical agitation type hot metal desulfurizing treatment and a step of executing the treatment for creating a new surface in the provided desulfurization slag.

4. A method according to claim 1, **characterized in that** the stop of executing the treatment for creating a new surface includes crushing a desulfurization slag grain and/or separating an aggregate of a plurality of desulfurization slag grains into desulfurization slag grains.

5. A method according to claim 1 **characterized in that** the step of executing the treatment for creating a new surface comprises a step of water-cooling the desulfurization slag and a step of drying a recovered desulfurizing agent resulting from the water cooling.

6. A method according to claim 1, **characterized in that** the step of executing the treatment for creating a new surface comprises a step of cooling the desulfurization slag and a step of adjusting the grain sizes of the desulfurization slag and the recovered desulfurizing agent.

7. A method according to claim 1, **characterized in that** the step of adjusting the grain size of the recovered desulfurizing agent using a sieve is executed at a temperature of 600°C or higher.

8. A method according to claim 1, **characterized in that** the step of executing the treatment for creating a new surface comprises a step of executing at least one or two treatments selected from the group consisting of a treatment for magnetically separating and removing metal from the desulfurization slag or the recovered desulfurizing agent, a treatment for removing large masses from the desulfurization slag or the recovered desulfurizing agent to set the grain size to 100 mm or smaller, and a treatment for setting the temperature of the desulfurization slag or the recovered desulfurizing agent to 200°C or lower.

9. A method according to claim 1, **characterized in that** the step of executing the treatment for creating a new surface comprises a step of setting the grain size of the desulfurization slag to 100 mm or smaller and the temperature thereof to 200°C or lower.

## Patentansprüche

1. Verfahren zum Herstellen eines Entschwefelungsmittels für heiße Metalle, wobei das Verfahren folgendes aufweist:
Durchführen einer Behandlung zur Schaffung einer neuen Oberfläche in Entschwefelungsschlacke, die durch eine Entschwefelungsbehandlung von heißem Metall vom Typ des mechanischen Rührens entsteht, durch Kühlen mit Wasser,
**dadurch gekennzeichnet, daß**
der Schritt, bei dem die Behandlung zur Schaffung einer neuen Oberfläche durch Kühlen mit Wasser vorgenommen wird, einen Schritt des Wässerns der Entschwefelungsschlacke aufweist und dieser Schritt des Wässerns die bereitgestellte Wassermenge steuert, so daß die Temperatur der Entschwefelungsschlacke am Ende des Wässerns bei 100 °C oder darüber gehalten wird, so daß nur durch Kühlen auf der Basis des Wässerns das Aggregat der Entschwefelungsschlacke in Entschwefelungsschlackekörner getrennt werden kann und/oder die Entschwefelungsschlackekörner zerkleinert werden können.

2. Verfahren zum Herstellen eines Entschwefelungsmittels für heiße Metalle für die Verwendung bei einer Entschwefelungsbehandlung von heißem Metall vom Typ des mechanischen Rührens nach Anspruch 1,
wobei das Verfahren **dadurch gekennzeichnet ist, daß**
es das Durchführen einer Behandlung zur Schaffung einer neuen Oberfläche in Entschwefelungsschlacke aufweist, die durch die Entschwefelungsbehandlung von heißem Metall vom Typ des mechanischen Rührens entsteht.

3. Verfahren nach Anspruch 1, **dadurch gekennzeichnet, daß**
es folgendes aufweist:
einen Schritt, bei dem Entschwefelungsschlacke bereitgestellt wird, die durch die Entschwefelungsbehandlung von heißem Metall vom Typ des mechanischen Rührens entsteht, und
einen Schritt, bei dem die Behandlung zur Schaffung einer neuen Oberfläche in der bereitgestellten Entschwefelungsschlacke vorgenommen wird.

4. Verfahren nach Anspruch 1, **dadurch gekennzeichnet, daß**
der Schritt, bei dem die Behandlung zur Schaffung einer neuen Oberfläche vorgenommen wird, das Zerkleinern der Entschwefelungsschlackekörner und/oder das Trennen eines Aggregats aus einer Vielzahl von Entschwefelungsschlackekörnern in Entschwefelungsschlackekörner aufweist.

5. Verfahren nach Anspruch 1, **dadurch gekennzeichnet, daß**
der Schritt, bei dem die Behandlung zur Schaffung einer neuen Oberfläche vorgenommen wird, folgendes aufweist:
einen Schritt, bei dem die Entschwefelungsschlacke mit Wasser gekühlt wird, und
einen Schritt, bei dem das durch das Kühlen mit Wasser entstandene Entschwefelungsmittel getrocknet wird.

6. Verfahren nach Anspruch 1, **dadurch gekennzeichnet, daß**
der Schritt, bei dem die Behandlung zur Schaffung einer neuen Oberfläche vorgenommen wird, folgendes aufweist:
einen Schritt, bei dem die Entschwefelungsschlacke gekühlt wird, und
einen Schritt, bei dem die Korngrößen der Entschwefelungsschlacke und des gewonnenen Entschwefelungsmittels eingestellt werden.

7. Verfahren nach Anspruch 1, **dadurch gekennzeichnet, daß**
der Schritt, bei dem die Korngröße des gewonnenen Entschwefelungsmittels eingestellt wird, unter Verwendung eines Siebes bei einer Temperatur von 600 °C oder darüber durchgeführt wird.

8. Verfahren nach Anspruch 1, **dadurch gekennzeichnet, daß**
der Schritt, bei dem die Behandlung zur Schaffung einer neuen Oberfläche vorgenommen wird, einen Schritt aufweist, bei dem zumindest eine oder zwei Behandlungen vorgenommen werden, die aus der Gruppe ausgewählt sind, bestehend aus einer Behandlung zum magnetischen Abtrennen und Entfernen von Metall aus der Entschwefelungsschlacke oder dem gewonnenen Entschwefelungsmittel, einer Behandlung zum Entfernen großer Massen aus der Entschwefelungsschlacke oder dem gewonnenen Entschwefelungsmittel, um die Korngröße bei 100 mm oder weniger einzustellen, und einer Behandlung zum Einstellen der Temperatur der Entschwefelungsschlacke oder des gewonnenen Entschwefelungsmittels bei 200 °C oder darunter.

9. Verfahren nach Anspruch 1, **dadurch gekennzeichnet, daß**
der Schritt, bei dem die Behandlung zur Schaffung einer neuen Oberfläche vorgenommen wird, einen Schritt aufweist, bei dem die Korngröße der Entschwefelungsschlacke bei 100 mm oder weniger und deren Temperatur bei 200 °C oder darunter eingestellt werden.

## Revendications

1. Procédé de fabrication d'un agent de désulfuration du métal chaud, le procédé comportant l'exécution d'un traitement pour créer une nouvelle surface par refroidissement à l'eau d'un laitier de désulfuration résultant d'un traitement de désulfuration du métal chaud de type à agitation mécanique, **caractérisé en ce que** l'étape d'exécution du traitement pour créer une nouvelle surface par refroidissement à l'eau comporte une étape d'aspersion du laitier de désulfuration, et cette étape d'aspersion régule la quantité d'eau délivrée de manière à maintenir la température du laitier de désulfuration à 100°C ou plus à la fin de l'aspersion, de sorte qu'uniquement par l'intermédiaire d'un refroidissement basé sur l'aspersion, l'agrégat de laitier de désulfuration peut être séparé en grains de laitier de désulfuration et/ou les grains de laitier de désulfuration peuvent être broyés.

2. Procédé de fabrication d'un agent de désulfuration du métal chaud destiné à être utilisé dans un traitement de désulfuration du métal chaud de type à agitation mécanique selon la revendication 1, le procédé étant **caractérisé en ce qu'**il comporte l'exécution d'un traitement pour créer une nouvelle surface d'un laitier de désulfuration résultant du traitement de désulfuration du métal chaud de type à agitation mécanique.

3. Procédé selon la revendication 1, **caractérisé en ce qu'**il comporte une étape de fourniture d'un laitier de désulfuration résultant du traitement de désulfuration du métal chaud de type à agitation mécanique et une étape d'exécution du traitement pour créer une nouvelle surface dans le laitier de désulfuration fourni.

4. Procédé selon la revendication 1, **caractérisé en ce que** l'arrêt de l'exécution du traitement pour créer une nouvelle surface inclut le broyage d'un grain de laitier de désulfuration et/ou la séparation d'un agrégat constitué d'une pluralité de grains de laitier de désulfuration en des grains de laitier de désulfuration.

5. Procédé selon la revendication 1, **caractérisé en ce que** l'étape d'exécution du traitement pour créer une nouvelle surface comporte une étape de refroidissement à l'eau du laitier de désulfuration et une étape de séchage d'un agent de désulfuration récupéré résultant du refroidissement à l'eau.

6. Procédé selon la revendication 1, **caractérisé en ce que** l'étape d'exécution du traitement pour créer une nouvelle surface comporte une étape de refroidissement du laitier de désulfuration et une étape d'ajustement des tailles de grains du laitier de désulfuration et de l'agent de désulfuration récupéré.

7. Procédé selon la revendication 1, **caractérisé en ce que** l'étape d'ajustement de la taille de grains de l'agent de désulfuration récupéré en utilisant un tamis est exécutée à une température de 600°C ou plus.

8. Procédé selon la revendication 1, **caractérisé en ce que** l'étape d'exécution du traitement pour créer une nouvelle surface comporte une étape d'exécution d'au moins un ou deux traitements sélectionnés parmi le groupe constitué d'un traitement pour séparer et retirer magnétiquement le métal du laitier de désulfuration ou de l'agent de désulfuration récupéré, d'un traitement pour retirer de grandes masses du laitier de désulfuration ou de l'agent de désulfuration récupéré pour établir la taille de grains à 100 mm ou moins, et d'un traitement pour établir la température du laitier de désulfuration ou de l'agent de désulfuration récupéré à 200°C ou moins.

9. Procédé selon la revendication 1, **caractérisé en ce que** l'étape d'exécution du traitement pour créer une nouvelle surface comporte une étape d'établissement de la taille de grains du laitier de désulfuration à 100 mm ou moins et de la température de celui-ci à 200°C ou moins.
